# EUROPEAN PATENT SPECIFICATION

(11) **EP 1 559 587 B1**
(45) Date of publication and mention of the grant of the patent: **20.08.2008**
(21) Application number: 05100509.8
(22) Date of filing: 26.01.2005
(51) Int. Cl.: B60C 1/00, B60C 11/11

(54) **Agricultural or industrial tire with reinforced rubber composition**
Landwirtschafts- oder Industrie-Reifen mit verstärkter Gummimischung
Pneumatique agricole ou industriel à mélange caoutchouteux renforcé

(30) Priority: 30.01.2004 US 768301
(43) Date of publication of application: 03.08.2005
(73) Proprietor: THE GOODYEAR TIRE & RUBBER COMPANY, Akron, OH 44316-0001 (US)
(72) Inventor: Bernard, Carlo, L-7590, Beringen (LU); Reuter, René François, L-9142, Burden (LU); Lechtenboehmer, Annette, L-9092, Ettelbruck (LU)
(74) Representative: Kutsch, Bernd

(56) References cited:
- EP-A2- 0 824 080
- FR-A1- 2 524 472
- US-A1- 4 480 672
- US-A1- 5 063 268
- US-A1- 6 062 282
- US-A1- 2003 089 438

## Description

### Technical Field

The present invention is directed to an agricultural or industrial pneumatic tire having a reinforced rubber composition. More particularly, the present invention is directed to an agricultural or industrial tire having a component comprising a reinforced rubber composition, wherein the rubber composition shows good adhesion to textile reinforcement.

### Background

Agricultural and industrial tires characteristically feature large, thick tread lugs. Cure of these tires requires long, high temperature cycles to ensure complete cure of the thickest rubber components. While the high temperature, long duration cures are necessary to cure the thicker components, the extreme conditions may have deleterious effects on other, thinner components of the tire. Such is the case with the tire carcass, the belts and other inserts of textile cords where the high cure temperatures may interfere with the development of good adhesion between the cord and the rubber coat. In particular, adhesion between polyester cords and rubber in agricultural or industrial tires is often poor at best. Rubber compositions to date used in agricultural or industrial tires often contribute to poor adhesion between the cords and rubber.

It would be desirable, therefore, to have an agricultural or industrial tire that has polyester reinforcement exhibiting good adhesion to rubber even after cure at high temperature and long time.

Document US-A-2003/0 089 438 discloses the features of the preamble of claim 1.

### Brief Description of the Drawings

The following is a brief description of the drawings in which like parts bear like reference numerals and in which:
Figure 1 is a cross-sectional view of the tire.

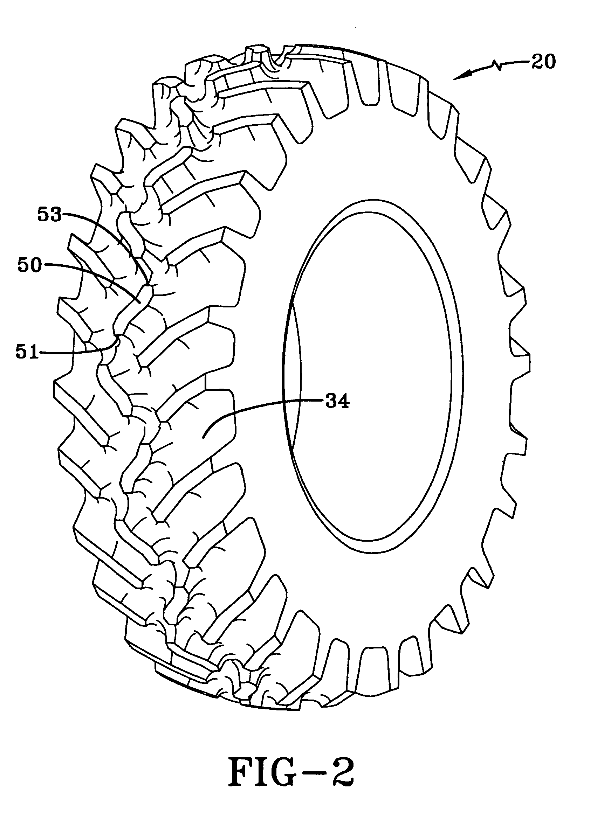

Figure 2 is a perspective view of a tire according to the invention.
Figure 3 is a plan view of a portion of the contact patch of a tire.

### Description

There is disclosed a pneumatic agricultural or industrial tire according to claim 1. Dependent claims refer to preferred embodiments of the invention.

Conventionally, the carcass ply component of a tire is a cord-reinforced element of the tire carcass. Often two or more carcass ply components are used in a tire carcass. The carcass ply component itself is conventionally a multiple cord-reinforced component where the cords are embedded in a rubber composition which is usually referred to as a ply coat. The ply coat rubber composition is conventionally applied by calendering the rubber onto the multiplicity of cords as they pass over, around and through relatively large, heated, rotating, metal cylindrical rolls. Such carcass ply component of a tire, as well as the calendering method of applying the rubber composition ply coat, are well known to those having skill in such art. The same applies for the tire belt layers, also formed of textile cords and treated the same way as the carcass layers. Other components in the tire casing that may include a polyester cord include bead inserts.

In practice, textile cords of various compositions may be used for the carcass ply or belts such as, for example, but not intended to be limiting polyester, rayon, aramid and nylon. Such cords and their construction, whether monofilament or as twisted filaments, are well known to those having skill in such art. In particular, polyester cords are desirable for use in agricultural or industrial tires because of their good properties and relatively low cost. However, as has been discussed herein, adhesion between the ply coat and polyester cord in agricultural or industrial tires has heretofore been less than adequate.

It has now been found that a plycoat rubber composition provides for improved adhesion between the polyester and ply coat in a cured agricultural or industrial tire.

The rubber composition includes one or more diene based elastomers or rubbers. Representative examples of rubber which may be used include natural rubber, polyisoprene, polybutadiene, styrene-butadiene rubber, styrene-isoprene-butadiene rubber, styrene-isoprene rubber, isoprene-butadiene rubber and mixtures thereof. Preferably, the rubbers are natural rubber, styrene-butadiene rubber and polybutadiene. In one embodiment, the rubber composition includes 100 parts by weight of rubber, of which 15 to 75 parts by weight is polybutadiene, along with 25 to 85 parts by weight of at least one additional rubber selected from styrene-butadiene rubber, and natural or synthetic polyisoprene.

In one embodiment of the present invention, the rubber stock may contain a "methylene donor" and a "methylene acceptor". The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor are resorcinol, unmodified phenol novolak resins, modified phenol novolak resin, resorcinol novolak resins, phenol formaldehyde resins and mixtures thereof. Examples of modified phenol novolak resins include cashew nut oil modified phenol novolak resin, tall oil modified phenol novolak resin and alkyl modified phenol novolak resin.

The amount of methylene acceptor that is included in the rubber composition may vary depending on the type of rubber, the particular methylene acceptor, the particular methylene donor and the desired physical properties, i.e., adhesion and tear. Generally speaking, the amount of methylene acceptor may range from 0.1 to 10 phr. Preferably, the amount of methylene acceptor ranges from 0.5 to 5.0 phr.

The rubber composition of the present invention contains a methylene donor which is suitable for reaction with the methylene acceptor. Examples of methylene donors which are suitable for use in the present invention include hexamethylenetetramine, hexaethoxymethylmelamine, hexamethoxymethylmelamine, lauryloxymethoxypyridinium chloride, ethoxymethylpyridinium chloride, trioxan hexamethoxymethylmelamine, the hydroxy groups of which may be esterified or partially esterified, and polymers of the methylene donors may be N-substituted oxymethylmelamines of the formula: 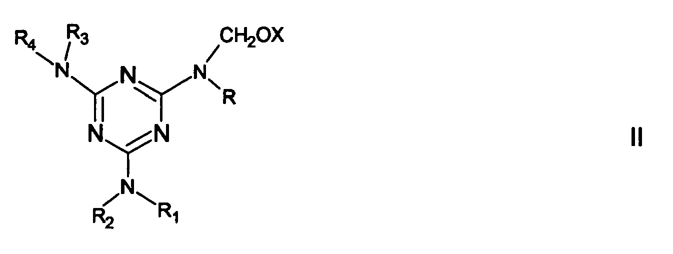 wherein X is an alkyl having from 1 to 8 carbon atoms, R, R₁, R₂, R₃, and R₄ are individually selected from the group consisting of hydrogen, an alkyl having from 1 to 8 carbon atoms, the group -CH₂OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and N,N',N"-tributyl-N,N',N"-trimethylol-melamine. The N-methylol derivatives of melamine are prepared by known methods.

The amount of methylene acceptor that is present in the rubber composition may vary depending on the type of rubber, the particular methylene acceptor, the particular methylene donor and the desired physical properties, i.e., adhesion and tear. Generally speaking, the amount of methylene donor may range from 0.1 to 10 phr. Preferably, the amount of methylene donor ranges from 0.5 to 5.0 phr.

The weight ratio of methylene donor to methylene acceptor can vary. Generally speaking, the weight ratio will range from 1:10 to 10:1. Preferably, the weight ratio ranges from 1:3 to 3:1.

The term "phr" as used herein, and according to conventional practice, refers to "parts by weight of a respective material per 100 parts by weight of rubber, or elastomer."

The rubber composition should contain a sufficient amount of filler to contribute a reasonably high modulus and high resistance to tear. The filler may be added in amounts ranging from 10 to 150 phr. Alternatively, the filler is present in an amount ranging from 20 to 60 phr. Fillers include silica, carbon black, starch/synthetic plasticizer composite filler, clays, calcium silicate and titanium dioxide. If carbon black is present, the amount of carbon black may vary. It is to be appreciated that a silica coupler may be used in conjunction with a carbon black, namely pre-mixed with a carbon black prior to addition to the rubber composition, and such carbon black is to be included in the aforesaid amount of carbon black for the rubber composition formulation.

The commonly employed siliceous pigments used in rubber compounding applications can be used as the silica in this invention, including pyrogenic and precipitated siliceous pigments (silica) and aluminosilicates, although precipitated silicas are preferred. The siliceous pigments preferably employed in this invention are precipitated silicas such as, for example, those obtained by the acidification of a soluble silicate, e.g., sodium silicate.

Silica may be used in an amount ranging from 5 to 50 phr, alternatively, from 10 to 30 phr.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, page 304 (1930).

The silica may also be typically characterized by having a dibutylphthalate (DBP) absorption value in a range of 100 to 400, and more usually 150 to 300.

Further, the silica, as well as the aforesaid alumina and aluminosilicate may be expected to have a CTAB surface area in a range of 100 to 220. The CTAB surface area is the external surface area as evaluated by cetyl trimethylammonium bromide with a pH of 9. The method is described in ASTM D 3849 for set up and evaluation.

Mercury surface area/porosity is the specific surface area determined by Mercury porosimetry. For such technique, mercury is penetrated into the pores of the sample after a thermal treatment to remove volatiles. Set-up conditions may be suitably described as using a 100 mg sample; removing volatiles during 2 hours at 105°C and ambient atmospheric pressure; ambient to 2000 bars pressure measuring range. Such evaluation may be performed according to the method described in Winslow, Shapiro in ASTM bulletin, p.39 (1959) or according to DIN 66133. For such an evaluation, a CARLO-ERBA Porosimeter 2000 might be used.

The average mercury porosity specific surface area for the silica should be in a range of 100 to 300 m²/g.

A suitable pore-size distribution for the silica, alumina and aluminosilicate according to such mercury porosity evaluation is considered herein to be five percent or less of its pores have a diameter of less than 10 nm; 60 to 90 percent of its pores have a diameter of 10 to 100 nm; 10 to 30 percent of its pores have a diameter of 100 to 1000 nm; and 5 to 20 percent of its pores have a diameter of greater than 1000 nm.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2, VN3, BV3380GR, etc, and silicas available from Huber, for example Huber Sil 8745.

The silica fillers are used with sulfur containing organosilicon compounds. Examples of suitable sulfur containing organosilicon compounds are of the formula I:

Z-Alk-Sₙ-Alk-Z I

in which Z is selected from the group consisting of 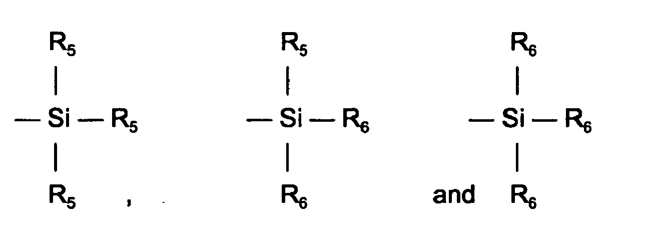 where R₅ is an alkyl group of 1 to 4 carbon atoms, cyclohexyl or phenyl; R₆ is alkoxy of 1 to 8 carbon atoms, or cycloalkoxy of 5 to 8 carbon atoms; Alk is a divalent hydrocarbon of 1 to 18 carbon atoms and n is from 2 to 8.

Specific examples of sulfur containing organosilicon compounds which may be used in accordance with the present invention include: 3,3"-bis(triethoxysilylpropl) disulfide, 2,2'-bis(dimethyl sec.butoxysilylethyl) trisulfide, 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(butyl dimethoxysilylpropyl) trisulfide, 18,18'-bis(tripropoxysilyloctadecenyl) tetrasulfide, and 3,3'-bis(trimethoxysilyl-2-methylpropyl) tetrasulfide.

The preferred sulfur containing organosilicon compounds are the 3,3'-bis(trimethoxy or triethoxy silylpropyl) sulfides. The most preferred compound is 3,3'-bis(triethoxysilylpropyl) tetrasulfide. Preferably Z is 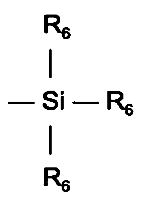 where R₆ is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 2 to 5.

The amount of the above sulfur containing organosilicon compound in a rubber composition will vary depending on the level of silica that is used. Generally speaking, the amount of the compound of formula I will range from 0.01 to 0.1 parts by weight per part by weight of the silica. Preferably, the amount will range from 0.04 to 0.08 parts by weight per part by weight of the silica.

Representative examples of reinforcing type carbon blacks(s), for this invention, include N326, N330, N332, N339, N343, N347, N351, N358, N375, N539, N550, N582, N650, N660, N683, N754, N762, N765, N774, and N787. Such types of carbon black are characterized through Iodine absorption ranging from 9 to 100 g/kg and DBP number ranging from 34 to 140 cm³/100g. In one embodiment, a suitable carbon black is an HAF-LS type, including but not limited to N326 type blacks. Carbon black may be used in an amount ranging from 10 to 100 phr.

Suitable starch/synthetic plasticizer composite filler may be composed of amylose units and amylopectin units in a ratio of 15/85 to 35/65, alternatively 20/80 to 30/70, and has a softening point according to ASTM No. D1228 in a range of 180°C to 220°C; and the starch/plasticizer has a softening point in a range of 110°C to 170°C according to ASTM No. D1228.

Starch/plasticizer composite filler may be used in an amount ranging from 1 to 50 phr. Alternatively, starch/plasticizer composite filler may be used in an amount ranging from 1 to 20 phr.

The starch/plasticizer composite may be desired to be used, for example, as a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

The plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. Hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

In general, the starch/plasticizer composite has a desired starch to plasticizer weight ratio in a range of 0.5/1 to 4/1, alternatively 1/1 to 3/1, so long as the starch/plasticizer composition has the required softening point range, and preferably, is capable of being a free flowing, dry powder or extruded pellets, before it is mixed with the elastomer(s).

While the synthetic plasticizer(s) may have a viscous nature at room temperature, or at 23°C and, thus, considered to be a liquid for the purposes of this description, although the plasticizer may actually be a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can be obtained in powder forms at different molecular weights and crystallinities such as, for example, a molecular weight of 11700 with an average particle size of 11.5 microns or a molecular weight (weight average) of 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in US-A- 5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an "esterification condensation reaction". Such esterification reactions are well known to those skilled in such art.

The starch is recited as being composed of amylose units and/or amylopectin units. Typically, the starch is composed of a combination of the amylose and amylopectin units in a ratio of 25/75. A somewhat broader range of ratios of amylose to amylopectin units is recited herein in order to provide a starch for the starch composite which interact with the plasticizer somewhat differently. For example, it is considered herein that suitable ratios may be from 20/80 up to 100/0, although a more suitable range is considered to be 15/85 to 35/63.

The starch can typically be obtained from naturally occurring plants. The starch/plasticizer composition can be present in various particulate forms such as, for example, fibrils, spheres or macromolecules, which may, in one aspect, depend somewhat upon the ratio of amylose to amylopectin in the starch as well as the plasticizer content in the composite.

The relative importance, if any, of such forms of the starch is the difference in their reinforcing associated with the filler morphology. The morphology of the filler primarily determines the final shape of the starch composite within the elastomer composition, in addition, the severity of the mixing conditions such as high shear and elevated temperature can allow to optimize the final filler morphology. Thus, the starch composite, after mixing, may be in a shape of one or more of hereinbefore described forms.

It is important to appreciate that the starch, by itself, is hydrophilic in nature, meaning that it has a strong tendency to bind or absorb water. Thus, the moisture content for the starch and/or starch composite has been previously discussed herein. This is considered to be an important, or desirable, feature in the practice of this invention because water can also act somewhat as a plasticizer with the starch and which can sometimes associate with the plasticizer itself for the starch composite such as polyvinyl alcohol and cellulose acetate, or other plasticizer which contain similar functionalities such as esters of polyvinyl alcohol and/or cellulose acetate or any plasticizer which can depress the melting point of the starch.

Various grades of the starch/plasticizer composition can be developed to be used with various elastomer compositions and processing conditions.

The starch typically has a softening point in a range of 180°C to 220°C, depending somewhat upon its ratio of amylose to amylopectin units, as well as other factors and, thus, does not readily soften when the rubber is conventionally mixed, for example, at a temperature in a range of 140°C to 165°C. Accordingly, after the rubber is mixed, the starch remains in a solid particulate form, although it may become somewhat elongated under the higher shear forces generated while the rubber is being mixed with its compounding ingredients. Thus, the starch remains largely incompatible with the rubber and is typically present in the rubber composition in individual domains.

However, it is now considered herein that providing starch in a form of a starch composite of starch and a plasticizer is particularly beneficial in providing such a composition with a softening point in a range of 110°C to 160°C.

The plasticizers can typically be combined with the starch such as, for example, by appropriate physical mixing processes, particularly mixing processes that provide adequate shear force.

The combination of starch and, for example, polyvinyl alcohol or cellulose acetate, is referred to herein as a "composite". Although the exact mechanism may not be completely understood, it is believed that the combination is not a simple mixture but is a result of chemical and/or physical interactions. It is believed that the interactions lead to a configuration where the starch molecules interact via the amylose with the vinyl alcohol, for example, of the plasticizer molecule to form complexes, involving perhaps chain entanglements. The large individual amylose molecules are believed to be interconnected at several points per molecule with the individual amylopectine molecules as a result of hydrogen bonding (which might otherwise also be in the nature of hydrophilic interactions).

This is considered herein to be beneficial because by varying the content and/or ratios of natural and synthetic components of the starch composite it is believed to be possible to alter the balance between hydrophobic and hydrophilic interactions between the starch components and the plasticizer to allow, for example, the starch composite filler to vary in form from spherical particles to fibrils.

In particular, it is considered herein that adding a polyvinyl alcohol to the starch to form a composite thereof, particularly when the polyvinyl alcohol has a softening point in a range of 90°C to 130°C, can be beneficial to provide resulting starch/plasticizer composite having a softening point in a range of 110°C to 160°C, and thereby provide a starch composite for blending well with a rubber composition during its mixing stage at a temperature, for example, in a range of 110°C to 165°C or 170°C.

As known to one skilled in the art, in order to cure a rubber composition, one needs to have a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur-vulcanizing agent is elemental sulfur. The amount of sulfur-vulcanizing agent will vary depending on the components of the rubber stock and the particular type of sulfur vulcanizing agent that is used. Generally speaking, the amount of sulfur-vulcanizing agent ranges from 0.1 to 8 phr. In another embodiment, the amount of sulfur may range from 0.3 to 6 phr.

Conventional rubber additives may be incorporated in the rubber composition of the present invention. The additives commonly used in rubber stocks include plasticizers, curatives, processing oils, retarders, antiozonants, antioxidants and the like. Plasticizers are conventionally used in amounts ranging from 2 to 50 phr. The amount of plasticizer used will depend upon the softening effect desired. Examples of suitable plasticizers include aromatic extract oils, petroleum softeners including asphaltenes, naphthenic oil, saturated and unsaturated hydrocarbons and nitrogen bases, coal tar products, cumarone-indene resins and esters such as dibutylphthalate and tricresyl phosphate. Materials used in compounding which function as an accelerator-activator includes metal oxides such as zinc oxide, magnesium oxide and litharge which are used in conjunction with acidic materials such as fatty acid, for example, stearic acid, oleic acid, murastic acid, and the like. The amount of the metal oxide may range from 1 to 10 phr with a range of from 2 to 8 phr being preferred. The amount of fatty acid which may be used may range from 0.25 phr to 5.0 phr with a range of from 0.5 phr to 2 phr being preferred.

Accelerators may be used to control the time and/or temperature required for vulcanization of the rubber stock. As known to those skilled in the art, a single accelerator may be used which is present in amounts ranging from 0.3 to 6 phr. In the alternative, combinations of two or more accelerators may be used which consist of a primary accelerator which is generally used in a larger amount (0.3 to 6 phr), and a secondary accelerator which is generally used in smaller amounts (0.05 to 0.50 phr) in order to activate and improve the properties of the rubber stock. Combinations of these accelerators have been known to produce synergistic effects on the final properties and are somewhat better than those produced by use of either accelerator alone. Suitable types of accelerators include non-amine generating type accelerators, including benzothiazoles and dithiophosphates. Suitable benzothiazole accelerators may be of the following formulas 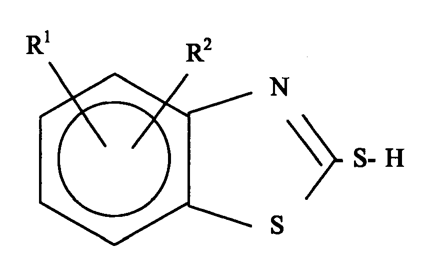 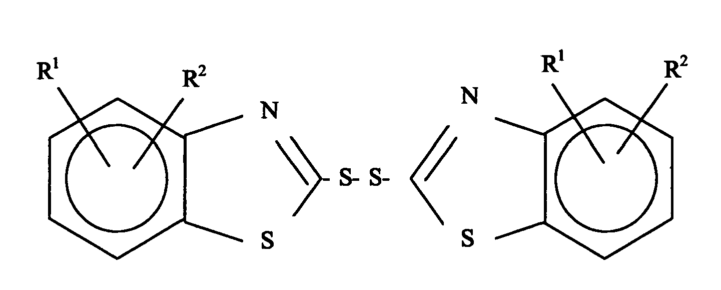 where R¹ and R² are independently selected from hydrogen, alkyl groups of one to six carbon atoms, or aryl groups of 6 to 10 carbon atoms. Examples of specific benzothiazoles include mercaptobenzothiazole, benzothiazyl disulfide , 2-mercapto-monoalkylbenzothiazoles, such as 2-mercapto-4-methylbenzothiazole, 2-mercapto-4-ethylbenzothiazole, 2-mercapto-5-methylbenzothiazole, 2-mercapto-5-ethylbenzothiazole, 2-mercapto-6-methylbenzothiazole, and 2-mercapto-6-ethylbenzothiazole; 2-mercapto-dialkylbenzothiazoles, such as 2-mercapto-4,5-dimethylbenzothiazole and 2-mercapto-4,5-diethylbenzothiazole; 2-mercapto-monoarylbenzothiazoles, such as 2-mercapto-4-phenylbenzothiazole, 2-mercapto-5-phenylbenzothiazole, and 2-mercapto-6-phenylbenzothiazole; bis(monoalkylbenzothiazolyl-2)-disulfides, such as bis(4-methylbenzothiazolyl-2)-disulfide, bis(4-ethylbenzothiazolyl-2)-disulfide, bis(5-methylbenzothiazolyl-2)-disulfide, bis(5-ethylbenzothiazolyl-2)-disulfide, bis(6-methylbenzothiazolyl-2)-disulfide, and bis(6-ethylbenzothiazolyl-2)-disulfide; bis(dialkylbenzothiazolyl-2)-disulfides, such as bis(4,5-dimethylbenzothiazolyl-2)-disulfide and bis(4,5-diethylbenzothiazolyl-2)-disulfide; and bis(monoarylbenzothiazolyl-2)-disulfides, such as bis(4-phenylbenzothiazolyl-2)-disulfide, bis(5-phenylbenzothiazolyl-2)-disulfide, and bis(6-phenylbenzothiazolyl-2)-disulfide. Examples of dithiophosphate accelerators include but are not limited to thioperoxydiphosphates, zinc phosphorodithioates, and basic zinc phosphorodithioates as disclosed in U.S. Patent Nos. 3,627,712 and 3,554,857, fully incorporated herein by reference. In one embodiment, the accelerator is mercaptobenzothiazole or benzothiazyl disulfide.

A class of compounding materials known as scorch retarders are commonly used. Phthalic anhydride, salicylic acid, sodium acetate and N-cyclohexyl thiophthalimide are known retarders. Retarders are generally used in an amount ranging from 0.1 to 0.5 phr.

Resins may be used in the rubber composition and are generally present in an amount ranging from 1.0 to 5.0 phr, with a range of from 1.5 to 3.5 phr being preferred. Suitable resins include coumarone type resins, including coumarone-indene resins and mixtures of coumarone resins, naphthenic oils, phenol resins, and rosins. Other suitable resins include phenol-terpene resins such as phenol-acetylene resins, phenol-formaldehyde resins, terpene-phenol resins, polyterpene resins, and xylene-formaldehyde resins. Further suitable resins include petroleum hydrocarbon resins such as synthetic polyterpene resins; aromatic hydrocarbon resins; aliphatic hydrocarbon resins; aliphatic cyclic hydrocarbon resins, such as dicyclopentadiene resins; aliphatic aromatic petroleum resins; hydrogenated hydrocarbon resins; hydrocarbon tackified resins; aliphatic alicyclic petroleum resins; rosin derivatives; and terpene resins. In one embodiment, the resin is selected from phenol-formaldehyde resins and aliphatic cyclic hydrocarbon resins. Suitable phenol-formaldehyde resins include an alkyl phenol formaldehyde novolac tackifying resin available from Schenectedy Chemicals as SP 1068. Suitable aliphatic cyclic hydrocarbon resins include copolymers of dicyclopentadiene and vinylaromatics (C9 petroleum fraction) having aromatic and unsaturated cycloaliphatic groups, available from Nevcin Chemicals as NECIRES LF210.

Conventionally, antioxidants and some times antiozonants, hereinafter referred to as antidegradants, are added to rubber composition. In the present invention, non-amine type antidegradants are preferred. Representative antidegradants include monophenols, bisphenols, thiobisphenols, polyphenols, hydroquinone derivatives, phosphites, thioesters, quinolines and mixtures thereof. Specific examples of such antidegradants are disclosed in The Vanderbilt Rubber Handbook (1990), Pages 282 through 286. Antidegradants are generally used in amounts from 0.25 to 5.0 phr with a range of from 1.0 to 3.0 phr being preferred.

The rubber composition of the present invention has a particular utility in a composite with reinforcing material as a wire coat stock or plycoat stock. Examples of such composites include tires, belts or hoses. In particular, the rubber stock of the present invention has utility as a wire coat stock or ply coat stock for use in tires in components including carcass ply, belts, and bead inserts.

The rubber composition may be reinforced with textile fiber or cord, including polyester, nylon, aramid, and rayon. In one embodiment, the textile is polyester. The textile may be treated with conventional RFL (resorcinol formaldehyde latex) type treatments as are known in the art.

Alternatively, the treatment of the textile cord may comprise treating the cord for example with a polyepoxide, followed by treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

It has now been found that treatment of polyester cord with a treatment subsequent to twisting of the polyester yarns into cord provides for improved adhesion between the polyester and ply coat in a cured agricultural or industrial tire.

The treatment of the polyester cord comprises treating the cord after twist of the yarn with an aqueous emulsion comprising a polyepoxide, followed by treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

The polyester cord used in the ply and belt may be made from any polyester fiber suitable for use in a tire as is known in the art. Polyester cords yarns are typically produced as multifilament bundles by extrusion of the filaments from a polymer melt. Polyester cord is produced by drawing polyester fiber into yarns comprising a plurality of the fibers, followed by twisting a plurality of these yarns into a cord. Such yarns may be treated with a spin-finish to protect the filaments from fretting against each other and against machine equipment to ensure good mechanical properties. In some cases the yarn may be top-coated with a so-called adhesion activator prior to twisting the yarn into cord. The polyester may also be treated with an RFL (Resorcinol-Formaldehyde-Latex ) dip after twisting the yarn into cord. The adhesion activator, typically comprising a polyepoxide, serves to improve adhesion of the polyester cord to rubber compounds after it is dipped with an RFL dip. Such dip systems are not robust against long and high temperature cures in compounds that contain traces of humidity and amines which attack the cord filament skin and degrade the adhesive / cord interface. The typical sign of failure is a nude polyester cord showing only traces of adhesive left on it.

In contrast to the prior art technique, in one embodiment of the present invention the polyester is treated with polyepoxide after the polyester yarns are twisted into cords. The twisted cords are dipped in an aqueous dispersion of a polyepoxide, also referred to herein as an epoxy or epoxy compound. The polyester cord may be formed from yarns that have been treated with sizing or adhesives prior to twist. Thus, cords made using conventional adhesive activated yarns, i.e., yarns treated with adhesive prior to twist, may be subsequently treated using the current methods.

As a polyepoxide, use may be made of reaction products between an aliphatic polyalcohol such as glycerine, propylene glycol, ethylene glycol, hexane triol, sorbitol, trimethylol propane, 3-methylpentanetriol, poly(ethylene glycol), poly(propylene glycol) etc. and a halohydrine such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. In one embodiment, the polyepoxide is derived from an ortho-cresol formaldehyde novolac resin.

The polyepoxide is used as an aqueous dispersion of a fine particle polyepoxide. In one embodiment, the polyepoxide is present in the aqueous dispersion in a concentration range of from 1 to 5 percent by weight. In another embodiment, the polyepoxide is present in the aqueous dispersion in a concentration range of from 1 to 3 percent by weight.

In a first treatment step, dry polyester cord is dipped in the aqueous polyepoxide dispersion. The cord is dipped for a time sufficient to allow a dip pick up, or DPU, of between 0.3 and 0.7 percent by weight of polyepoxide. In another embodiment, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In a second treatment step, the polyepoxide treated polyester cord is dipped in a modified RFL liquid. The adhesive composition is comprised of (1) resorcinol, (2) formaldehyde and (3) a styrene-butadiene rubber latex, (4) a vinylpyridine-styrene-butadiene terpolymer latex, and (5) a blocked isocyanate. The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably around 10 to 28 parts by solids of the latex mixture. The condensation product forming the resole or resole type resin forming materials should preferably be partially reacted or reacted so as to be only partially soluble in water. Sufficient water is then added to give around 12 percent to 30 percent by weight overall solids in the final dip. Alternatively, the total solids in the final dip may range from 12 to 18 percent by weight. The weight ratio of the polymeric solids from the latex to the resorcinol/formaldehyde resin should be in a range of 2 to 6.

The RFL adhesive also includes a blocked isocyanate. In one embodiment from 1 to 8 parts by weight of solids of blocked isocyanate is added to the adhesive. The blocked isocyanate may be any suitable blocked isocyanate known to be used in RFL adhesive dips, including but not limited to caprolactam blocked methylene-bis-(4-phenylisocyanate), such as Grilbond-IL6 available from EMS American Grilon, Inc., and phenol formaldehyde blocked isocyanates as disclosed in US-A- 3,226,276; 3,268,467; and 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as e.-caprolactam, δ-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and styrene-butadiene rubber latex may be added to the RFL adhesive. The vinylpyridiene-styrene-butadiene erpolymer may be present in the RFL adhesive such that the solids weight of the vinylpyridiene-styrene-butadiene terpolymer is from 50 percent to 100 percent of the solids weight of the styrene-butadiene rubber; in other words, the weight ratio of vinylpyridiene-styrene-butadiene terpolymer to styrene-butadiene rubber is from 1 to 2.

It is normally preferable to first prepare the polymer latex and then add the partially condensed condensation product. However, the ingredients (the resorcinol and formaldehyde) can be added to the polymer latex in the uncondensed form and the entire condensation can then take place in situ. The latex tends to keep longer and be more stable if it is kept at an alkaline pH level.

In accordance with this invention, the polyepoxide treated cord is dipped for one to three seconds in the RFL dip and dried at a temperature within the range of 120°C to 265°C for 0.5 minutes to 4 minutes and thereafter calendered into the rubber and cured therewith. The drying step utilized will preferably be carried out by passing the cord through 2 or more drying ovens which are maintained at progressively higher temperatures. For instance, it is highly preferred to dry the cord by passing it through a first drying oven which is maintained at a temperature of 250°F (121 °C) to 300°F (149°C) and then to pass it through a second oven which is maintained at a temperature which is within the range of 350°F (177°C) to 500°F (260°C). It should be appreciated that these temperatures are oven temperatures rather than the temperature of the cord being dried. The cord will preferably have a total residence time in the drying ovens which is within the range of 1 minute to 5 minutes. For example, a residence time of 30 seconds to 90 seconds in the first oven and 30 seconds to 90 seconds in the second oven could be employed.

In another embodiment, the polyester cord may be subjected to multiple dips in the RFL dip. For example, the polyester cord may be first dipped in the polyepoxide, followed by one or more dips in the RFL. The separate dips in RFL may utilitize RFL solutions of different total solids, to obtain a final desired DPU.

After treatment of the polyester cord in the polyepoxide and RFL, the treated cord is incorporated into a ply layer with a rubber ply coat compound.

Pneumatic tires are conventionally comprised of a generally toroidal shaped casing with an outer circumferential tread adapted to the ground-contacting space beads and sidewalls extending radially from and connecting said tread to said beads. The tread may be built, shaped, molded and cured by various methods which will be readily apparent to those skilled in the art.

In the case of a agricultural or industrial tire, the typical cure cycle for curing a green tire utilizes high temperatures and longer cure times than is typical for smaller, passenger type tires. The longer cure times and higher temperatures of cure are sufficient to cure the thick, heavy rubber components of the agricultural or industrial tire. These components include the tread lugs which typically cure more slowly that the thinner parts of the tire. The tread lugs have a width in a range of from 2 cm to 10 cm, alternately 5 to 10 cm, and length in a range of from 2 cm to 60 cm, alternately 5 to 60 cm, and a height in a range of from 2 cm to 10 cm, alternately 5 to 10 cm. The tread may further have a net-to-gross ratio in a range of from 15 to 40 percent as measured around the entire 360° circumference of a normally inflated and normally loaded tire contacting a flat hard surface, as described further hereinafter. Alternatively, the net-to-gross ratio may be in a range of from 15 to 30 percent. Thus, the cure cycle of high temperature and long time would be understood by one skilled in the art as characteristic of cure in an agricultural or industrial tire having thick, heavy tread lugs.

In one embodiment, the agricultural or industrial tire may be cured at a temperature ranging from 150°C to 190°C. In another embodiment, the agricultural tire may be cured at a temperature ranging from 160°C to 180°C. The agricultural tire may be cured for a time ranging from 40 minutes to 150 minutes. In another embodiment, the agricultural tire may be cured for a time ranging from 60 minutes to 120 minutes. Generally, the cure time and temperature is sufficient to cure the characteristically thick, heavy tread of the agricultural or industrial tire. The agricultural or industrial tire having thick, heavy tread is characteristically cured using the long times and high temperatures.

The invention may be better understood by reference to the accompanying Figures, for which the following definitions are applicable:
"Casing" means the tire body exclusive of the tread.
"Circumferential" means lines or directions extending along the perimeter of the surface of the annular tread perpendicular to the axial direction.
"Equatorial Plane (EP)" means the plane perpendicular to the tire's axis of rotation and passing through the center of its tread.
"Footprint" means the contact patch or area of contact of the tire tread with a flat surface at zero speed and under normal load and pressure.
"Lateral Edge" means the axially outermost edge of the tread as defined by a plane parallel to the equatorial plane and intersecting the outer ends of the axially outermost traction lugs at the radial height of the inner tread surface.
"Leading" refers to a portion or part of the tread that contacts the ground first, with respect to a series of such parts or portions, during rotation of the tire in the direction of travel.
"Net-to-gross Ratio" means the ratio of the surface are of the normally loaded and normally inflated tire tread rubber that makes contact with a hard flat surface, divided by the total area of the tread, including non-contacting portions such as grooves as measured around the entire circumference of the tire.
"Normal Inflation Pressure" means the specific design inflation pressure and load assigned by the appropriate standards organization for the service condition for the tire
"Normal Load" means the specific design inflation pressure and load assigned by the appropriate standards organization for the service condition for the tire.
"Radial" and "radially" mean directions radially toward or away from the axis of rotation of the tire.
"Trailing" refers to a portion or part of the tread that contacts the ground last, with respect to a series of such parts or portions during rotation of the tire in the direction of travel.

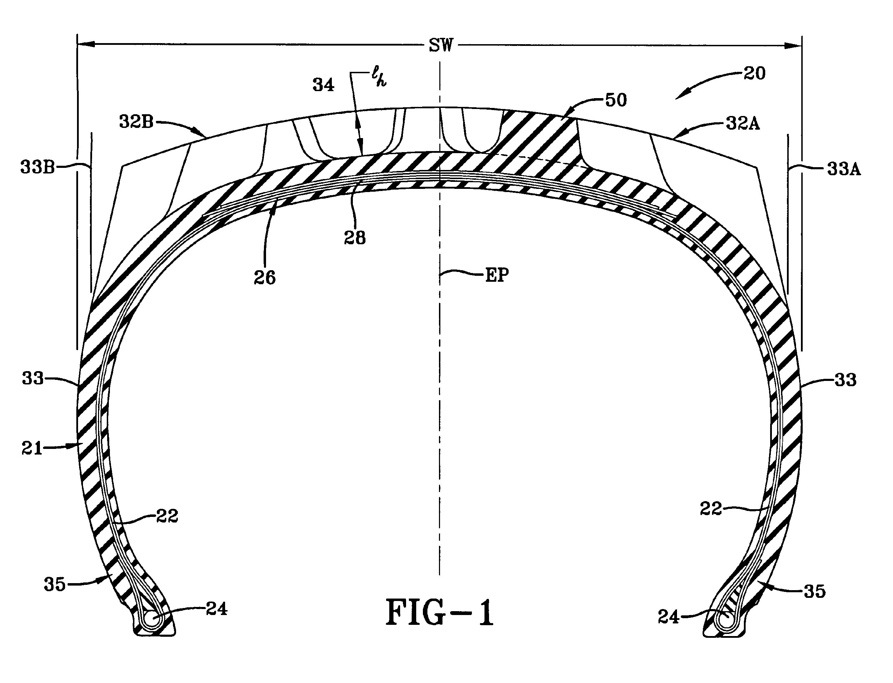

Now referring to Fig. 1, a tire representing one embodiment of the present invention is shown in cross-section view generally as reference numeral 20. The pneumatic tire has a carcass 21 having one or more carcass plies 22 extending circumferentially about the axis of rotation of the tire 20. The carcass plies are anchored around a pair of substantially inextensible annular beads 24. A belt-reinforcing member 26 comprising one or more belt plies 28 are disposed radially outwardly from the carcass plies. The belt plies provide reinforcement for the crown region of the tire. A circumferentially extending tread 32A, 32B is located radially outwardly of the belt reinforcing structure 26.

A sidewall portion 33 extends radially inwardly from each axial or lateral tread edge 33A, 33B of the tread to an annular bead portion 35 having the beads 24 located therein.

The carcass plies 22 preferably have textile or synthetic cords reinforcing the plies. The cords are preferably oriented radially, but bias ply type tires are also envisioned. Typically, the tire may have two, three or four plies, each construction increasing in load carry capability as a function of the number of plies.

The belt reinforcement member 26 preferably includes at least two belts reinforced by synthetic cords of polyester, nylon, rayon or aramid.

Disposed between the first and the second tread edge 33A, 33B is an inner tread 34 and a plurality of lugs 50 extending radially outwardly from the inner tread 34.

Each lug 50 has a radially outer surface, a leading first edge, a trailing second edge and a centerline between the first and second edges. Each central lug 50 extends generally circumferentially from a leading end 51 to a trailing end 53. Other lug configurations are possible and are determined by the design of the tire depending on the particular tire service environment.

The average distance along the centerlines 63A, 63B, 63C between the leading and trailing ends 51, 53 defines total the length (Iₗ) of the lug 50.

The distance extending substantially perpendicularly between the first and second edges 52, 54 of the central lug define the lug width (I_{w}). The radial distance extending between the inner tread 34 and the edges 51, 53 of the lug 50 defines the radial lug height (Iₕ).

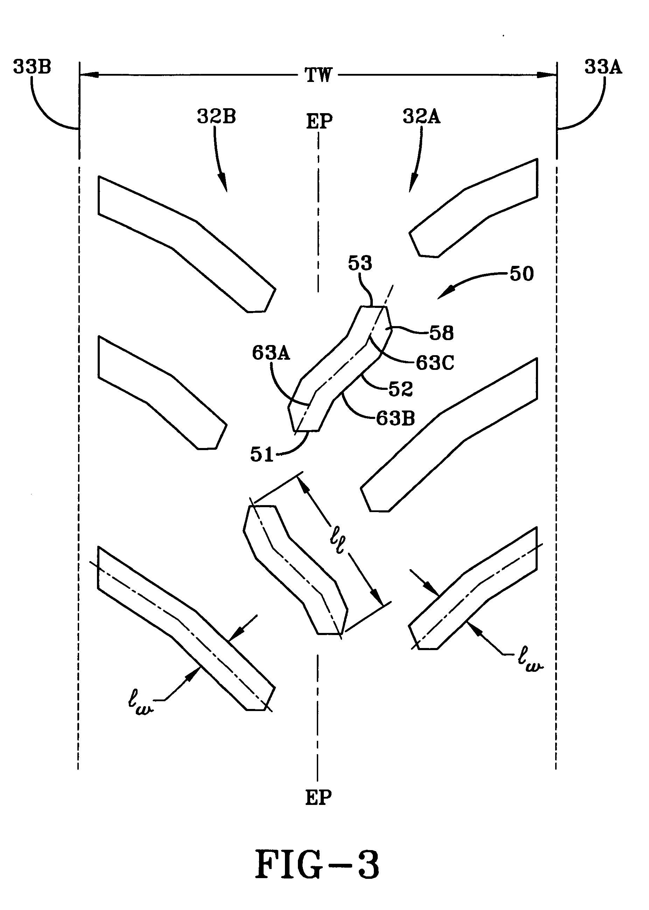

As shown in Fig. 3 the net-to-gross ratio of the tread is less than 25%. More generally, the net-to-gross ratio may be within the range for agricultural tires as previously discussed herein. The space between the lugs creates large soil discharge channels.

It is understood that one can vary the overall shape of the lugs and can modify the general orientation, number, or appearance of the lugs.

The invention is further illustrated by the following examples.

### Example 1

Plycoat compositions were compounded following the recipes given in Table 1. Physical properties of the plycoat compositions were determined as given in Table 2.

**Table 1. Compositions**

| Sample | 1 | 2 | 3 |
|---|---|---|---|
| Non Productive | | | |
| natural rubber | 100 | 65 | 65 |
| polybutadiene | 0 | 0 | 10 |
| polybutadiene, 37 phr oil extended | 0 | 43.75 | 31.25 |
| stearic acid | 3.5 | 2 | 1.5 |
| process oil | 2 | 2 | 0 |
| resin¹ | 0 | 0.5 | 2 |
| resin² | 0 | 0 | 2 |
| resin³ | 1.3 | 1.3 | |
| antidegradant⁴ | 2 | 0 | 0 |
| antidegradant⁵ | 0 | 1.5 | 1.5 |
| zinc oxide | 6 | 5 | 4 |
| silica | 15 | 15 | 15 |
| SI-69 coupling agent | 2 | 2 | 2 |
| carbon black | 35 | 38 | 38 |

| Productive | | | |
|---|---|---|---|
| 2,2'-dibenzothiazyl disulfide | 0.2 | 0 | 1.65 |
| sulfenamide (CBS⁶) | 1.2 | 1.5 | 0 |
| hexamethoxymethylmelamine | 1.25 | 1.25 | 2 |
| antidegradant⁴ | 0 | 0.5 | 0 |
| sulfur | 2.56 | 1.5 | 1.65 |

| | | | |
|---|---|---|---|
| ¹alkyl-phenol-formaldehyde novolac tackifying resin ²heat reactive hydrocarbon resin, petroleum derived ³reactive phenol formaldehyde resin ⁴paraphenylene diamine type ⁵dihydroquinoline type ⁶N-cyclohexyl-2-benzothiazole sulfenamide | | | |

**Table 2. Physical Properties**

| Sample | 1 | 2 | 3 |
|---|---|---|---|
| Ring Modulus, measured at 23°C; cured 74 minutes at 160°C | | | |
| 300% Modulus , MPa | 11.9 | 4.4 | 5.7 |
| Tensile Strength, MPa | 16.8 | 16.2 | 14.7 |
| Elongation At Break, % | 414 | 708 | 583 |
| True Tensile, MPa | 86 | 131 | 101 |
| Rebound Value, % | 53.6 | 49 | 49.2 |
| Shore A | 62.2 | 54.5 | 57.9 |

| Ring Modulus, measured at 23°C; cured 44 minutes at 180°C | | | |
|---|---|---|---|
| 300% Modulus, MPa | 10.6 | 3.8 | 5.4 |
| Tensile Strength, MPa | 12.6 | 11.1 | 13.6 |
| Elongation At Break, % | 366 | 604 | 565 |
| True Tensile, MPa | 59 | 78 | 90 |
| Rebound Value, % | 50 | 48 | 47.8 |
| Shore A | 60.5 | 51.8 | 58.3 |

| MDR, Temp. 150°C | | | |
|---|---|---|---|
| Min. Torque, dN-m | 2.7 | 2.9 | 3.2 |
| Max. Torque, dN-m | 18.5 | 12.4 | 14.1 |
| T₂₅, min | 3 | 10.7 | 4.3 |
| T₅₀, min | 4 | 14.7 | 7.6 |
| T₉₀, min | 7.7 | 24.6 | 32.7 |
| T-1 | 41.2 | - | - |
| Time To Max Torque, min | 14.6 | 44 | 120 |
| Max Rate Time, dN-m/s | 2.9 | 13.8 | 3.8 |

| MDR, Temp. 180°C | | | |
|---|---|---|---|
| Min. Torque, dN-m | 2.38 | 2.67 | 2.82 |
| Max. Torque, dN-m | 16.92 | 10.16 | 12.08 |
| T₂₅, min | 0.68 | 1.46 | 0.76 |
| T₅₀, min | 0.87 | 2.2 | 1.13 |
| T₉₀, min | 1.46 | 3.95 | 3.07 |
| T-1 | 4.1 | - | - |
| Time To Max. Torque, min. | 2.5 | 7.2 | 20 |
| Max. Rate Time, dN-m/s | 0.7 | 1.7 | 0.8 |

### Example 2

In this example, the effect of varying the composition of a plycoat on the adhesion to four different textiles is illustrated. The textile cords were conventionally treated with dips according to the textile type used. Adhesion test samples were prepared using the compositions of Example 1.

Adhesion test samples were prepared by a standard peel adhesion test on 1" wide specimens. Strip adhesion samples were made by plying up a layers of fabric with both sides coated with rubber coat compound to make a rubberized fabric, followed by preparation of a sandwich of two layers of the rubberized fabric separated by a mylar window sheet. The sandwich was cured and 1" samples cut centered on each window in the mylar. The cured samples were then tested for adhesion between the rubberized fabrics in the area defined by the mylar window by 180 degree pull on a test apparatus. Percent rubber coverage on cord was determined by visual comparison. Parallel samples were cured using the following cure cycles: 32 minutes at 150°C (characteristic of passenger tires and sport utility vehicle tires), 137 minutes at 160°C (long cure cycle for agricultural and industrial tires), and 44 minutes at 180°C (shorter cure cycle for agricultural and industrial tires). Results of the adhesion tests are shown in Tables 1 and 2.

**Table 3. Adhesion to TextilesAll cords conventionally dipped, according to textile type Thickness of rubber between cords 1.5 mm**

| Compound of Example 1 | 1 | 2 | 3 |
|---|---|---|---|
| Cure Cycle, minutes/°C | Static Strip Adhesion Force, (N) | | |
| (Polyester Cord, 1440/3 6.5/6.5 TPI) | | | |
| 32/150 | 231 | 246 | 377 |
| 74/160 | 92 | 210 | 272 |
| 137/160 | 80 | 183 | 199 |
| 44/180 | 82 | 181 | 204 |

| (Nylon Cord, 1400/2 8/10 TPI) | | | |
|---|---|---|---|
| 32/150 | 343 | 330 | 530 |
| 74/160 | 276 | 377 | 525 |
| 137/160 | 250 | 349 | 479 |
| 44/180 | 182 | 319 | 490 |

| (Aramid Cord, 1670/3 6.9/6.9 TPI) | | | |
|---|---|---|---|
| 32/150 | 236 | 306 | 406 |
| 74/160 | 191 | 245 | 383 |
| 137/160 | 214 | 259 | 372 |
| 44/180 | 146 | 246 | 342 |

| (Rayon Cord, 2440/3 6.5/6.5 TPI) | | | |
|---|---|---|---|
| 32/150 | 390 | 316 | 496 |
| 74/160 | 305 | 369 | 446 |
| 137/160 | 224 | 391 | 444 |
| 44/180 | 187 | 329 | 449 |

As is evident from the data in Tables 1 and 2, polyester cord treated following the procedure disclosed herein surprisingly and unexpectedly shows superior adhesion to rubber ply coat compounds as compared with the controls. In particular, the improved adhesion is observed in samples having been cured at high temperature and long cure times, as is experienced in agricultural tires.

### Example 3

In this example, the effect of humidity on the adhesion of plycoat compound to polyester cord is illustrated. Polyester cord and plycoat compound samples were conditioned to the moisture contents as indicated in Table 4. Adhesion samples were fabricated and tested as described in Example 2, with results as given in Table 4.

**Table 4. Adhesion to Polyester in Humid Conditions Thickness of rubber between cords 1.5 mm Polyester Cord, 1440/3 6.5/6.5 TPI, conventionally dipped**

| Sample | 4 | 5 | 6 | 7 | 8 | 9 |
|---|---|---|---|---|---|---|
| Compound of Ex. 1 | 1 | 1 | 1 | 3 | 3 | 3 |
| Compound moisture(%) | 0.1 | 0.45 | 1.53 | 0.13 | 0.43 | 1.11 |
| Cord moisture (%) | 0.24 | 0.61 | 0.39 | 0.24 | 0.61 | 0.39 |
| Conditioning: | dried | original | moist | dried | original | moist |

| Static Strip Adhesion Force (N) Cure Cycle, minutes/°C | Static Strip Adhesion Force, (N) | | | | | |
|---|---|---|---|---|---|---|
| 32/150 | 289.3 | 186.4 | 215.8 | 377.2 | 336.0 | 248.2 |
| 74/160 | 176.8 | 104.5 | 65.0 | 338.1 | 224.2 | 328.3 |
| 137/160 | 161.8 | 79.4 | 73.4 | 277.7 | 231.3 | 289.9 |
| 44/180 | 113.7 | 86.6 | 90.1 | 233.9 | 199.8 | 246.6 |

As is evident from the data of Table 4, samples made using the plycoat composition of the present invention (samples 7, 8, 9) show greatly improved resistance to degradation of the adhesion of plycoat to polyester, even in the presence of elevated moisture. Samples cured under extreme conditions characteristic of agricultural tires surprisingly and unexpectedly show good adhesion.

### Example 4

Plycoat compositions were compounded following the recipes given in Table 5. Physical properties of the plycoat compositions were determined as given in Table 6.

**Table 5**

| Sample | 10 (control) | 11 |
|---|---|---|
| Non Productive | | |
| natural rubber | 60 | 65 |
| styrene-butadiene, 37 phr oil ext. | 41.25 | 0 |
| polybutadiene | 10 | 10 |
| polybutadiene, 37 phr oil extended | 0 | 31.25 |
| stearic acid | 2 | 1.5 |
| process oil | 9 | 0 |
| resin¹ | 0 | 2 |
| resin² | 0 | 2 |
| resin³ | 1 | 2 |
| antidegradant⁵ | 0 | 1.5 |
| zinc oxide | 3 | 4 |
| silica | 0 | 15 |
| SI-69 coupling agent | 0 | 2 |
| carbon black | 50 | 38 |

| Productive | | |
|---|---|---|
| 2,2'-dibenzothiazyl disulfide | 0.09 | 1.65 |
| sulfenamide (CBS⁶) | 0.7 | 0 |
| hexamethoxymethylmelamine | 0 | 2 |
| hexamthylenetetramine | 1 | 0 |
| antidegradant⁴ | 0.18 | 0 |
| sulfur | 2.8 | 1.65 |

| | | |
|---|---|---|
| ¹ alkyl-phenol-formaldehyde novolac tackifying resin ² heat reactive hydrocarbon resin, petroleum derived ³ reactive phenol formaldehyde resin ⁴ bland ⁵ 1,2 dihydro 2,2,4 trimethylquinoline ⁶ N-cyclohexyl-2-benzothiazole sulfenamide | | |

**Table 6. Physical Properties**

| Sample | 10 (control) | 11 |
|---|---|---|
| Ring Modulus, measured at 23°C; cured 74 minutes at 160°C | | |
| 300% Modulus , MPa | 7.6 | 5.7 |
| tensile strength, MPa | 8.7 | 14.7 |
| elongation at break, % | 355 | 583 |
| true tensile, MPa | 40 | 101 |
| rebound value, % | 60.8 | 49.2 |
| Shore A | 54.8 | 57.9 |

| Ring Modulus, measured at 23°C; cured 44 minutes at 180°C | | |
|---|---|---|
| 300% Modulus , MPa | 6.2 | 5.4 |
| Tensile Strength, MPa | 8.4 | 13.6 |
| Elongation At Break, % | 396 | 565 |
| True Tensile, MPa | 42 | 90 |
| Rebound Value, % | 57 | 47.8 |
| Shore A | 50.4 | 58.3 |

| MDR, Temp. 150°C | | |
|---|---|---|
| Min. Torque, dN-m | 1.6 | 3.2 |
| Max. Torque, dN-m | 14.7 | 14.1 |
| T₂₅, min | 5.4 | 4.3 |
| T₅₀, min | 6.6 | 7.6 |
| T₉₀, min | 11.6 | 32.7 |
| T-1 | 60.9 | - |
| Time To Max. Torque, min | 23.2 | 120 |
| Max. Rate Time, dN-m/s | 5.1 | 3.8 |

| MDR, Temp. 180°C | | |
|---|---|---|
| Min. Torque, dN-m | 1.36 | 2.82 |
| Max. Torque, dN-m | 13.08 | 12.08 |
| T₂₅, min | 0.83 | 0.76 |
| T₅₀, min | 1.08 | 1.13 |
| T₉₀, min | 1.86 | 3.07 |
| T-1 | 7.8 | - |
| Time To Max. Torque, min. | 3.6 | 20 |
| Max. Rate Time, dN-m/s | 0.9 | 0.8 |

### Example 5

In this example, the effect of varying the composition of a plycoat on the adhesion to polyester cord treated with a successive polyepoxide/ RFL is illustrated. Adhesive activated polyester yarns were first twisted to form polyester cords. The cords were then treated with an aqueous dispersion of a 2 percent by weight of fine particle ortho-cresol formaldehyde novolac polyepoxide resin by dipping the cord for 5 seconds, followed by drying for 60 seconds at 140°C. The cords were then treated with an 26.5% total solids RFL dip containing equal weights of SBR and vinylpyridine-styrene-butadiene, and a blocked isocyanate, by dipping the cord for 5 seconds, following by drying for 60 seconds at 140°C and finally for 60 seconds at 245°C.

A control polyester cord was made by using adhesive activated polyester yarn treated with an RFL containing a blocked isocyanate dip before twist of the yarns.

Adhesion test samples were prepared using the compositions of Example 4 and following the procedures of Example 2. Results of the adhesion tests are shown in Table 7.

**Table 7 Adhesion to RFL Treated Polyester Thickness of rubber between cords 0.6 mm**

| Compound of Example 4 | 10 | 11 |
|---|---|---|
| Cure Cycle, minutes/ °C | Static Strip Adhesion Force, (N) | |
| (Polyester Cord, 1440/3 6.5/6.5 TPI, conventional RFL dip before yarn twist) | | |
| 32/150 | 188 | 323 |
| 137/160 | 102 | 120 |
| 44/180 | 92 | 74 |

| (Polyester Cord, 1440/3 6.5/6.5 TPI, polyepoxide and RFL dip after yarn twist) | | |
|---|---|---|
| 32/150 | 245 | 486 |
| 137/160 | 203 | 282 |
| 44/180 | 185 | 240 |

As is evident from the data in Table 7, polyester cord treated following the procedure disclosed herein surprisingly and unexpectedly shows superior adhesion to the rubber ply coat compounds disclosed herein as compared with the controls. In particular, the improved adhesion is observed in samples having been cured at high temperature and long cure times, as is experienced in agricultural tires.

### Example 6

In this example, the effect of dual-pass dipping of polyester cords using the RFL treatment procedure of the present invention is illustrated. Polyester cords were treated with a SBRlvinylpyridine-SBRlblocked isocyanate RFL as in Example 5, except that the cords were subjected to a two-pass dipping procedure. In the first pass (after twist of the cords), the cord was dipped in polyepoxide, followed by dipping in an RFL containing 26.5% solids. In the second pass, the cord was dipped in a first RFL containing 15% solids, followed by a dip in the RFL containing 26.5% solids. A control cord was made as in Example 5 with a single dip in RFL before twist of the yarns.

Adhesion test samples were prepared using the compositions of Example 4 and following the procedures of Example 2. Adhesion test samples were made for cords after the first pass dipping and after the second pass dipping. Results of the adhesion tests are shown in Table 8.

**Table 8 Adhesion to Dual Pass RFL Treated Polyester Thickness of rubber between cords 0.6 mm**

| Compound of Example 4 | 10 | 11 |
|---|---|---|
| Cure Cycle, minutes/°C | Static Strip Adhesion Force, (N) | |
| (Polyester Cord, 1440/3 6.5/6.5 TPI, conventional RFL dip before yarn twist) | | |
| 32/150 | 194 | 313 |
| 137/160 | 126 | 173 |
| 44/180 | 103 | 177 |

| (Polyester Cord, 1440/3 6.5/6.5 TPI, polyepoxide and first pass in 26.5 % solids RFL dip, after yarn twist) | | |
|---|---|---|
| 32/150 | 181 | 256 |
| 137/160 | 161 | 188 |
| 44/180 | 128 | 175 |

| (Polyester Cord, 1440/3 6.5/6.5 TPI, polyepoxide and first pass in 26.5 % solids RFL dip and second pass in 15% solids RFL then 26.5% solids RFL, after yarn twist) | | |
|---|---|---|
| 32/150 | 181 | 256 |
| 137/160 | 161 | 188 |
| 44/180 | 128 | 175 |

| (Polyester Cord, 1440/3 6.5/6.5 TPI, polyepoxide and first pass in 26.5 % solids RFL dip and second pass in 15% solids RFL then 26.5% solids RFL, after yarn twist) | | |
|---|---|---|
| 32/150 | 221 | 263 |
| 137/160 | 181 | 209 |
| 44/180 | 158 | 165 |

## Claims

1. A pneumatic agricultural or industrial tire (20) comprising a casing (21) and a rubber tread disposed radially outwardly of the casing (21), the tread having an inner tread (34) and a plurality of tread lugs (50) projecting radially from the inner tread (34), said casing (21) having at least one component (22, 26, 28), said component comprising textile cord and a rubber composition in contact with said textile cord, said rubber composition **characterized by**
100 parts by weight of at least one diene based elastomer, including from 75 to 15 parts by weight of polybutadiene and 25 to 85 parts by weight of at least one additional diene based elastomer selected from the group consisting of styrene-butadiene rubber, synthetic polyisoprene and natural polyisoprene;
from 0.1 to 8 parts by weight of at least one accelerator selected from benzothiazoles and dithiophosphates and exclusive of sulfenamides;
from 1 to 15 parts by weight of at least one resin selected from phenol-formaldehyde resins, aliphatic cyclic hydrocarbon resins, and aromatic hydrocarbon resin;
from 10 to 150 parts by weight of a filler selected from the group consisting of carbon black, silica, and starch/plasticizer composite filler; and
from 0.3 to 3 parts by weight of sulfur;
wherein each lug (50) has a width in a range of from 2 cm to 10 cm and length in a range of from 2 cm to 60 cm, and a height in a range of from 2 cm to 10 cm, and wherein the tread (32A, 32B, 34) has a net-to-gross ratio in a range of from 15 to 40 percent as measured around the entire 360° circumference of a normally inflated and normally loaded tire contacting a flat hard surface.

2. The pneumatic agricultural or industrial tire of claim 1, wherein said at least one resin is selected from phenol-formaldehyde resins and aliphatic cyclic hydrocarbon resins.

3. The pneumatic agricultural or industrial tire of claim 1 or 2, wherein said dithiophosphate accelerator is selected from the group consisting of thioperoxydiphosphates, zinc phosphorodithioates, and basic zinc phosphorodithioates.

4. The pneumatic agricultural or industrial tire of at least one of preceding claims, wherein said at least one benzothiazole accelerator is selected from compounds having the following formulas 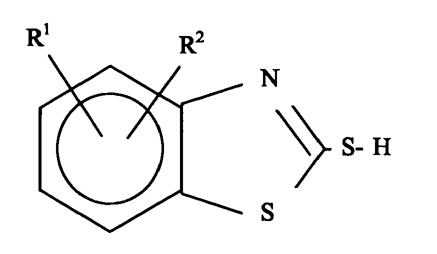 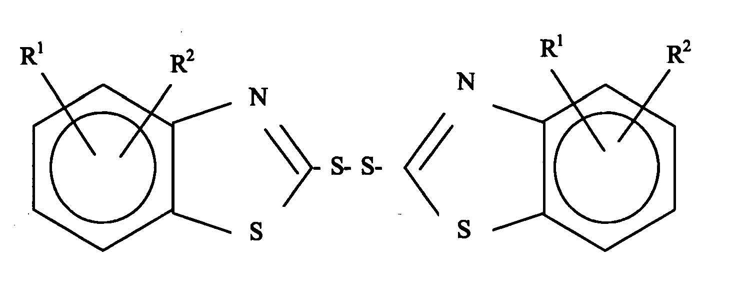 where R1 and R2 are independently selected from hydrogen, alkyl groups of one to six carbon atoms, or aryl groups of 6 to 10 carbon atoms.

5. The pneumatic agricultural or industrial tire of at least one of the preceding claims, wherein said benzothiazole accelerator is selected from mercaptobenzothiazole, benzothiazyl disulfide, 2-mercapto-monoalkylbenzothiazoles, such as 2-mercapto-4-methylbenzothiazole, 2-mercapto-4-ethylbenzothiazole, 2-mercapto-5-methylbenzothiazole, 2-mercapto-5-ethylbenzothiazole, 2-mercapto-6-methylbenzothiazole, and 2-mercapto-6-ethylbenzothiazole; 2-mercapto-dialkylbenzothiazoles, such as 2-mercapto-4,5-dimethylbenzothiazole and 2-mercapto-4,5-diethylbenzothiazole; 2-mercapto-monoarylbenzothiazoles, such as 2-mercapto-4-phenylbenzothiazole, 2-mercapto-5-phenylbenzothiazole, and 2-mercapto-6-phenylbenzothiazole; bis(monoalkylbenzothiazolyl-2)-disulfides, such as bis(4-methylbenzothiazolyl-2)-disulfide, bis(4-ethylbenzothiazolyl-2)-disulfide, bis(5-methylbenzothiazolyl-2)-disulfide, bis(5-ethylbenzothiazolyl-2)-disulfide, bis(6-methylbenzothiazolyl-2)-disulfide, and bis(6-ethylbenzothiazolyl-2)-disulfide; bis(dialkylbenzothiazolyl-2)-disulfides, such as bis(4,5-dimethylbenzothiazolyl-2)-disulfide and bis(4,5-diethylbenzothiazolyl-2)-disulfide; and bis(monoarylbenzothiazolyl-2)-disulfides, such as bis(4-phenylbenzothiazolyl-2)-disulfide, bis(5-phenylbenzothiazolyl-2)-disulfide, and bis(6-phenylbenzothiazolyl-2)-disulfide.

6. The pneumatic agricultural or industrial tire of at least one of the preceding claims, wherein said textile cord is selected from the group consisting of polyester, aramid, nylon, and rayon.

7. The pneumatic agricultural or industrial tire of claim 6, wherein said polyester cord is formed by first obtaining a cord through twisting together a plurality of polyester yarns; secondly treating the cord with an aqueous emulsion comprising a polyepoxide; and thirdly treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

8. The pneumatic agricultural or industrial tire of claim 7, wherein said polyepoxide is selected from the group consisting of reaction products between an aliphatic polyalcohol and a halohydrin, reaction products between an aromatic polyalcohol and a halohydrin, and reaction products between a novolac phenolic resin or a novolac resorcinol resin and a halohydrin.

9. The pneumatic agricultural or industrial tire of claim 7, wherein said polyepoxide is present in said aqueous emulsion in a concentration range of from 1 to 5 percent by weight and/or wherein said polyepoxide is present on said polyester cord in a range of from 0.3 to 0.7 percent by weight.

10. The pneumatic agricultural or industrial tire of at least one of the previous claims, wherein said at least one component (22, 26, 28) is selected from carcass plies, belts, and bead inserts.

## Patentansprüche

1. Landwirtschafts- oder Industrie-Luftreifen (20), umfassend einen Mantel (21) und eine radial auswärts von dem Mantel (21) angeordnete Kautschuklauffläche, wobei die Lauffläche eine Innenlauffläche (34) und eine Mehrzahl radial von der Innenlauffläche (34) vorragender Profilstollen (50) aufweist, wobei der Mantel (21) mindestens eine Komponente (22, 26, 28) aufweist, wobei die Komponente Textilkord und eine Kautschukzusammensetzung in Kontakt mit dem Textilkord umfasst, wobei die Kautschukzusammensetzung **gekennzeichnet ist durch**
100 Gewichtsteile mindestens eines dienbasierten Elastomers, das 75 bis 15 Gewichtsteile Polybutadien und 25 bis 85 Gewichtsteile mindestens eines zusätzlichen dienbasierten Elastomers, ausgewählt aus der aus StyrolButadien-Kautschuk, synthetischem Polyisopren und natürlichem Polyisopren bestehenden Gruppe, beinhaltet ;
0,1 bis 8 Gewichtsteile mindestens eines Beschleunigungsmittels, ausgewählt aus Benzothiazolen und Dithiophosphaten und unter Ausschluss von Sulfenamiden ;
1 bis 15 Gewichtsteile mindestens eines Harzes, ausgewählt aus Phenol-Formaldehydharzen, aliphatischen zyklischen Kohlenwasserstoffharzen und aromatischem Kohlenwasserstoffharz ;
10 bis 150 Gewichtsteile eines Füllstoffs, ausgewählt aus der aus Carbon Black, Silika und Stärke-Weichmacher-Kompositfüllstoff bestehenden Gruppe ; und
0,3 bis 3 Gewichtsteile Schwefel ;
wobei jeder Stollen (50) eine Breite in einem Bereich von 2 cm bis 10 cm und eine Länge in einem Bereich von 2 cm bis 60 cm und eine Höhe in einem Bereich von 2 cm bis 10 cm hat, und wobei die Lauffläche (32A, 32B, 34) ein Netto-Brutto-Verhältnis in einem Bereich von 15 bis 40 Prozent aufweist, gemessen um den gesamten 360 °-Umfang eines normal befüllten und normal belasteten Reifens, der mit einer flachen harten Oberfläche in Kontakt ist.

2. Landwirtschafts- oder Industrie-Luftreifen nach Anspruch 1, wobei das mindestens eine Harz aus Phenol-Formaldehydharzen und aliphatischen zyklischen Kohlenwasserstoffharzen ausgewählt ist.

3. Landwirtschafts- oder Industrie-Luftreifen nach Anspruch 1 oder 2, wobei das Dithiophosphat-Beschleunigungsmittel aus der aus Thioperoxydiphosphaten, Zinkphosphorodithioaten und basischen Zinkphosphorodithioaten bestehenden Gruppe ausgewählt ist.

4. Landwirtschafts- oder Industrie-Luftreifen nach mindestens einem der vorgenannten Ansprüche, wobei das mindestens eine Benzothiazol-Beschleunigungsmittel aus Verbindungen mit den folgenden Formeln ausgewählt ist 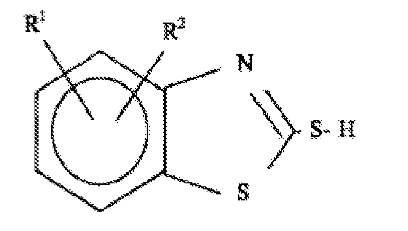 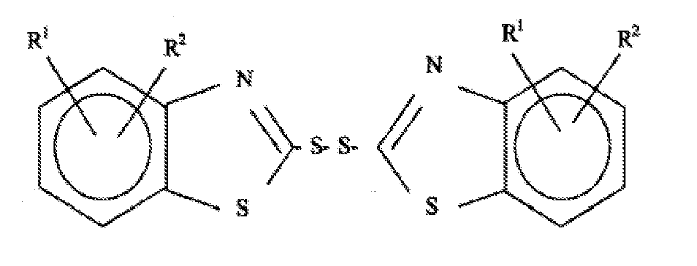 wobei R1 und R2 unabhängig aus Wasserstoff, Alkylgruppen von einem bis sechs Kohlenstoffatomen oder Arylgruppen von 6 bis 10 Kohlenstoffatomen ausgewählt sind.

5. Landwirtschafts- oder Industrie-Luftreifen nach mindestens einem der vorgenannten Ansprüche, wobei das Benzothiazol-Beschleunigungsmittel ausgewählt ist aus Mercaptobenzothiazol, Benzothiazyldisulfid, 2-Mercaptomonoalkylbenzothiazolen, wie etwa 2-Mercapto-4-methylbenzothiazol, 2-Mercapto-4-ethylbenzothiazol, 2-Mercapto-5-methylbenzothiazol, 2-Mercapto-5-ethylbenzothiazol, 2-Mercapto-6-methylbenzothiazol und 2-Mercapto-6-ethylbenzothiazol ; 2-Mercaptodialkylbenzo-thiazolen, wie etwa 2-Mercapto-4,5-dimethylbenzothiazol und 2-Mercapto-4,5-diethylbenzothiaol ; 2-Mercapto-monoarylbenzothiazolen, wie etwa 2-Mercapto-4-phenylbenzothiazol, 2-Mercapto-5-phenylbenzothiazol und 2-Mercapto-6-phenylbenzothiazol ; Bis(monoalkylbenzo-thiazolyl-2)-disulfiden, wie etwa Bis(4-methylbenzo-thiazolyl-2)disulfid, Bis(4-ethylbenzothiazolyl-2)-disulfid, Bis(5-methylbenzothiazolyl-2)-disulfid, Bis(5-ethylbenzothiazolyl-2)-disulfid, Bis(6-methylbenzothiazolyl-2)-disulfid und Bis(6-ethylbenzothiazolyl-2)-disulfid ; Bis(dialkylbenzothiazolyl-2)-disulfiden, wie etwa Bis(4,5-dimethylbenzothiazolyl-2)-disulfid und bis(4,5-diethylbenzothiazolyl-2)-disulfid ; und Bis(monoarylbenzothiazolyl-2)-disulfiden, wie etwa Bis(4-phenylbenzothiazolyl-2)-disulfid, Bis(5-phenylbenzothiazolyl-2)-disulfid und Bis(6-phenylbenzothiazolyl-2)-disulfid.

6. Landwirtschafts- oder Industrie-Luftreifen nach mindestens einem der vorgenannten Ansprüche, wobei der Textilkord aus der aus Polyester, Aramid, Nylon und Rayon bestehenden Gruppe ausgewählt ist.

7. Landwirtschafts- oder Industrie-Luftreifen nach Anspruch 6, wobei der Polyesterkord geformt wird, indem zuerst ein Kord durch miteinander Verdrillen einer Mehrzahl von Polyestergarnen erhalten wird ; zweitens der Kord mit einer wässrigen Emulsion, die ein Polyepoxid enthält, behandelt wird ; und drittens der Kord mit einer wässrigen RFL-Emulsion, die ein Resorcinol-Formaldehydharz, einen Styrol-Butadien-Copolymerlatex, einen Vinylpyridin-Styrol-Butadien-Terpolymerlatex und ein blockiertes Isocyanat umfasst, behandelt wird.

8. Landwirtschafts- oder Industrie-Luftreifen nach Anspruch 7, wobei das Polyepoxid aus der aus Reaktionsprodukten zwischen einem aliphatischen Polyalkohol und einem Halohydrin, Reaktionsprodukten zwischen einem aromatischen Polyalkohol und einem Halohydrin und Reaktionsprodukten zwischen einem Novolak-Phenolharz oder einem Novolak-Resorcinolharz und einem Halohydrin bestehenden Gruppe ausgewählt ist.

9. Landwirtschafts- oder Industrie-Luftreifen nach Anspruch 7, wobei das Polyepoxid in der wässrigen Emulsion in einem Konzentrationsbereich von 1 bis 5 Gewichtsprozent vorhanden ist und/oder wobei das Polyepoxid an dem Polyesterkord in einem Bereich von 0,3 bis 0,7 Gewichtsprozent vorhanden ist.

10. Landwirtschafts- oder Industrie-Luftreifen nach mindestens einem der vorgenannten Ansprüche, wobei die mindestens eine Komponente (22, 26, 28) aus Karkassenlagen, Gürteln und Wulsteinsätzen ausgewählt ist.

## Revendications

1. Bandage pneumatique agricole ou industriel (20) comprenant une carcasse (21) et une bande de roulement en caoutchouc disposée à l'extérieur de la carcasse (21), en direction radiale, la bande de roulement possédant une bande de roulement interne (34) et plusieurs barrettes de bande de roulement (50) faisant saillie en direction radiale par rapport à la bande de roulement interne (34), ladite carcasse (21) possédant au moins un composant (22, 26, 28), ledit composant comprenant des câblés en textile et une composition de caoutchouc en contact avec lesdits câblés en textile, ladite composition du caoutchouc étant **caractérisée par** :
à concurrence de 100 parties en poids, au moins un élastomère à base diénique, comprenant, à concurrence de 75 à 15 parties en poids, du polybutadiène et à concurrence de 25 à 85 parties en poids, au moins un élastomère supplémentaire à base diénique choisi parmi le groupe constitué par du caoutchouc de styrène-butadiène, du polyisoprène synthétique et du polyisoprène naturel ;
à concurrence de 0,1 à 8 parties en poids, au moins un accélérateur choisi parmi le groupe comprenant des benzothiazoles et des dithiophosphates, à l'exclusion des sulfénamides ;
à concurrence de 1 à 15 parties en poids, au moins une résine choisie parmi le groupe comprenant des résines de phénol-formaldéhyde, des résines d'hydrocarbures cycliques aliphatiques, et des résines d'hydrocarbures aromatiques ;
à concurrence de 10 à 150 parties en poids, une matière de charge choisie parmi le groupe constitué par du noir de carbone, de la silice et une matière de charge composite contenant de l'amidon/un plastifiant ;
à concurrence de 0,3 à trois parties en poids, du soufre ;
dans lequel chaque barrette (50) possède une largeur dans la plage de 2 cm à 10 cm et une longueur de la plage de 2 cm à 60 cm, et une hauteur de la plage de 2 cm à 10 cm, et dans lequel la bande de roulement (32a, 32B, 34) possède un rapport net/brut dans la plage de 15 à 40 %, telle qu'on la mesure autour de la circonférence totale de 360° d'un bandage pneumatique normalement gonflé et normalement chargé, qui entre en contact avec une surface dure et plate.

2. Bandage pneumatique agricole ou industriel selon la revendication 1, dans lequel ladite au moins une résine est choisie parmi le groupe comprenant des résines de phénol-formaldéhyde et des résines d'hydrocarbures cycliques aliphatiques.

3. Bandage pneumatique agricole ou industriel selon la revendication 1 ou 2, dans lequel ledit accélérateur à base de dithiophosphate est choisi parmi le groupe constitué par des thioperoxydiphosphates, des phosphorodithioates de zinc et des phosphorodithioates de zinc basiques.

4. Bandage pneumatique agricole ou industriel selon au moins une des revendications précédentes, dans lequel ledit au moins un accélérateur à base de benzothiazole est choisi parmi les composés répondant aux formules suivantes :

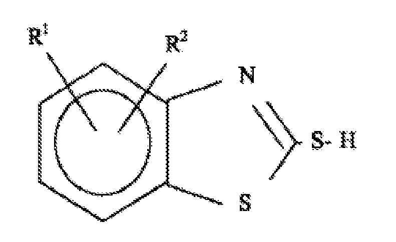

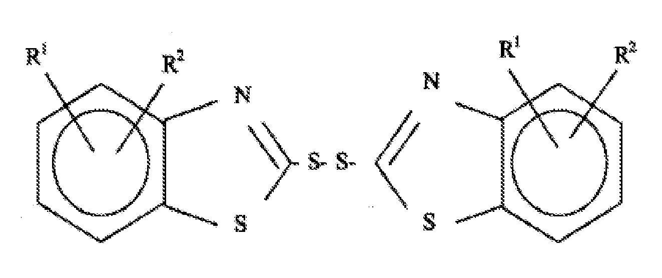

5. Bandage pneumatique agricole ou industriel selon au moins une des revendications précédentes, dans lequel ledit accélérateur à base de benzothiazole est choisi parmi le groupe comprenant du mercaptobenzothiazole, du disulfure de benzothiazyle, des 2-mercapto-monoalkylbenzothiazoles tels que le 2-mercapto-4-méthylbenzothiazole, le 2-mercapto-4-éthyl-benzothiazole, le 2-mercapto-5-méthyl-benzothiazole, le 2-mercapto-5-éthyl-benzothiazole, le 2-mercapto-6-méthylbenzothiazole et le 2-mercapto-6-éthyl-benzothiazole ; des 2-mercapto-dialkyl-benzothiazoles tels que le 2-mercapto-4,5-diméthyl-benzothiazole et le 2-mercapto-4,5-diéthyl-benzothiazole ; des 2-mercapto-monoarylbenzothiazoles tels que le 2-mercapto-4-phénylbenzothiazole, le 2-mercapto-5-phényl-benzothiazole et le 2-mercapto-6-phényl-benzothiazole ; des bis(monoalkylbenzothiazolyl-2) disulfures tels que le bis(4-méthylbenzothiazolyl-2) disulfure, le bis(4-éthylbenzothiazolyl-2) disulfure, le bis(5-méthylbenzothiazolyl-2) disulfure, le bis(5-éthylbenzothiazolyl-2) disulfure, le bis(6-méthylbenzothiazolyl-2) disulfure et le bis(6-éthylbenzothiazolyl-2) disulfure ; des bis(dialkylbenzothiazolyl-2) disulfures tels que le bis(4,5-diméthylbenzothiazolyl-2) disulfure et le bis(4,5-diéthylbenzothiazolyl-2) disulfure ; et des bis(monoarylbenzothiazolyl-2) disulfures tels que le bis(4-phényl-benzothiazolyl-2) disulfure, le bis(5-phényl-benzothiazolyl-2) disulfure et le bis(6-phénylbenzothiazolyl-2) disulfure.

6. Bandage pneumatique agricole ou industriel selon au moins une des revendications précédentes, dans lequel ledit câblé en textile est choisi parmi le groupe constitué par du polyester, de l'aramide, du nylon et de la rayonne.

7. Bandage pneumatique agricole ou industriel selon la revendication 6, dans lequel ledit câblé en polyester est formé en procurant d'abord un câblé par torsion réciproque de plusieurs fils de polyester ; en traitant ensuite le câblé avec une émulsion aqueuse comprenant un polyépoxyde ; et en traitant en troisième lieu le câblé avec une émulsion aqueuse RFL comprenant une résine de résorcinol-formaldéhyde, un latex de copolymère de styrène-butadiène, un latex de terpolymère de vinylpyridine-styrène-butadiène et un isocyanate bloqué.

8. Bandage pneumatique agricole ou industriel selon la revendication 7, dans lequel ledit polyépoxyde est choisi parmi le groupe constitué par des produits réactionnels entre un polyalcool aliphatique et une halogénhydrine, des produits réactionnels entre un polyalcool aromatique et une halogénhydrine et des produits réactionnels entre une résine phénolique de type novolaque ou une résine de résorcinol de type novolaque et une halogénhydrine.

9. Bandage pneumatique agricole ou industriel selon la revendication 7, dans lequel ledit polyépoxyde présent dans ladite émulsion aqueuse dans une plage de conversion de 1 à 5 % en poids et/ou dans lequel ledit polyépoxyde est présent sur ledit câblé en polyester dans la plage de 0,3 à 0,7 % en poids.

10. Bandage pneumatique agricole ou industriel selon au moins une des revendications précédentes, dans lequel ledit au moins un composant (22, 24, 26) est choisi parmi le groupe comprenant des nappes de carcasse, des ceintures et des pièces rapportées de talons.
